# EUROPÄISCHE PATENTANMELDUNG

(11) **EP 2 109 152 A2**
(43) Veröffentlichungstag der Anmeldung: **14.10.2009**
(21) Anmeldenummer: 09001277.4
(22) Anmeldetag: 30.01.2009
(51) Int. Cl.: H01L 31/042

(54) **Montagesystem für Ständer für Photovoltaik-Freiflächenanlagen**

(30) Priorität: 10.04.2008 DE 102008018422
(71) Anmelder: Leichtmetallbau Schletter GmbH, 83527 Kirchdorf (DE)
(72) Erfinder: Hausner, Martin, Tucson, Arizona 85742 (US); Schletter, Ludwig, 83527 Haag (DE)

(57) **Zusammenfassung**

Das Montagesystem für Ständer für Photovoltaik-Freiflächenanlagen umfasst je Ständer eine Stütze (1), einen Schrägbalken (2) sowie eine Strebe (3), die mittels drei Gelenkverbindungen (20, 70, 90) in Form eines Dreieckfachwerks zusammensetzbar sind. Die beiden am Schrägbalken (2) für die Stütze (1) und die Strebe (3) vorgesehenen Gelenkverbindungen (20, 70) weisen Gelenkansätze auf, die am Schrägbalken (2) unverdrehbar längsgeführt und zu einer vorgefertigten Baugruppe dort fest angesetzt sind. Neigung des Schrägbalkens (2) und dessen Positionierung über der Stütze (1) sind werksseitig vorgeben und am Aufstellungsort korrigierbar.

## Beschreibung

Die Erfindung betrifft ein Montagesystem für Ständer für Photovoltaik-Freiflächenanlagen, ein Verfahren zum Konfektionieren eines solchen Montagesystems sowie einen aus dem Montagesystem erstellten Ständer und dessen ortsfeste Anordnung. Aus derartigen Montagesystemen errichtete Ständer bieten den oberen Komponenten von Photovoltaikanlagen auf freiem Gelände linienförmige Auflager in einer fest einstellbaren und solarenergetisch günstigen Neigung.

Für solche Ständer sind dem Fachmann bereits Montagesysteme bekannt. Sie umfassen im Wesentlichen jeweils eine im Boden zu gründende Stütze, einen Schrägbalken als linienförmiges Auflager, eine zusätzliche Strebe zum Abstreben des Schrägbalkens gegen die Stütze sowie drei Gelenkverbindungen. Mittels der Gelenkverbindungen können die Stütze, der Schrägbalken und die Strebe zu einem fest einstellbaren Ständer in Form eines Dreieckfachwerks zusammengesetzt werden. Hierbei umfassen die beiden Gelenkverbindungen zum Schrägbalken jeweils einen separaten Gelenkansatz. Diese beiden Gelenkansätze sind auf die Enden der Strebe und der Stütze starr aufsetzbar, und sie können mittels Schraubbolzen am Schrägbalken entlang einer Längsführung an verschiedenen Positionen und in unterschiedlichen Winkelstellungen festgeklemmt werden. Längsführung, Drehlagerung und Klemmung erfolgen systembedingt mit denselben Schraubbolzen. Die Montage der Komponenten eines solchen Systems nimmt einschließlich der Stellarbeiten für eine korrekte Neigung und Position des Schrägbalkens einige Handgriffe und Zeit in Anspruch und erfordert zudem gewissenhaftes Arbeiten.

Es ist daher Aufgabe der Erfindung, dem Monteur ein Montagesystem der zuvor genannten Art zur Hand zu geben, das sich einfacher und schneller als bisher errichten lässt.

Die Aufgabe wird mit dem in Anspruch 1 angegebenen Montagesystem für Ständer für Photovoltaik-Freiflächenanlagen gelöst. Demgemäß ist je Ständer eine Stütze und ein Schrägbalken sowie eine Strebe zum Abstreben des Schrägbalkens gegen die Stütze vorgesehen, wobei die Stütze, der Schrägbalken und die Strebe zu einem fest einstellbaren Ständer in Form eines Dreieckfachwerks zusammengesetzt werden können und hierfür zwischen Schrägbalken und Stütze eine erste und zwischen Schrägbalken und Strebe eine zweite und zwischen Strebe und Stütze eine dritte Gelenkverbindung vorgesehen ist und die erste Gelenkverbindung einen ersten Gelenkansatz und die zweite Gelenkverbindung einen zweiten Gelenkansatz umfasst und die beiden Gelenkansätze am Schrägbalken längsgeführt anordenbar sind.
Die Neuerung besteht darin, dass eine den Schrägbalken und die beiden Gelenkansätze umfassende Baugruppe zusammengesetzt ist, wobei die beiden Gelenkansätze am Schrägbalken unverdrehbar längsgeführt und dort an Sollpositionen fest angesetzt sind, und dass die Stütze mit dem ersten Gelenkansatz und die Strebe mit dem zweiten Gelenkansatz drehgelenkig verbindbar sind.

Hierbei ist die Stütze des erfindungsgemäßen Montagesystems dazu bestimmt, am Standort der Freiflächenanlage ortsfest eingespannt zu werden, insbesondere im Boden oder an einem Fundament, und Lasten nach unten abzutragen. Eine vertikale Gründung durch Rammen hat sich dabei in der Praxis besonders bewährt. Es ist auch denkbar, die Stütze schräg zu errichten.
Der Schrägbalken ist als linienförmiges Auflager für die oberen Komponenten der Freiflächenanlage vorgesehen. Bei errichtetem Ständer ist der Schrägbalken dazu idealerweise nach Süden ausgerichtet und verläuft in einer solarenenergetisch günstigen, fest eingestellten Neigung. Auf den Schrägbalken können insbesondere querverlaufende Modultragprofile montiert werden, auf denen wiederum die Photovoltaikmodule der Freiflächenanlage installierbar sind.
Bei errichtetem Ständer ist der Schrägbalken an einer statisch günstigen Position zwischen seinen Enden vorzugsweise direkt über der Stütze angeordnet, und die Strebe kann den Schrägbalken gegen die Stütze schräg nach unten abstreben. Auf diese Art kann ein Stabwerk erzeugt werden, das in seiner Gestalt die Grundform eines Dreiecks einschließt. Diese Dreiecksgeometrie beruht, wie aus dem Stand der Technik bekannt, zweckmäßigerweise auf dem Ergebnis einer Statikberechnung, die bevorzugt von einem Tragwerksplaner durchgeführt werden kann und insbesondere die gewünschte Neigung, Länge und Traglast des Schrägbalkens berücksichtigt. Die Positionen der ersten und zweiten Gelenkverbindungen längs des Schrägbalkens und die Position der dritten Gelenkverbindung längs der Stütze können gemäß einer solchen Statikberechnung vorgegeben und dementsprechend Sollpositionen sein.

Im Unterschied zu dem bekannten Montagesystem sind die Hauptfunktionen der beiden Gelenkansätze, und zwar einerseits eine Drehlagerung und andererseits einen Ansatz zu bieten, umgekehrt angeordnet. Erfindungsgemäß können daher die Gelenkansätze am Schrägbalken angesetzt und stattdessen die Stütze und die Strebe relativ zu den Gelenkansätzen drehgelenkig angeordnet werden. Außerdem sind die Gelenkansätze am Schrägbalken unverdrehbar längsgeführt, wodurch ein Verschieben der Gelenkansätze längs des Schrägbalkens weiterhin möglich, ein Verschwenken gegenüber dem Schrägbalken jedoch unterbunden ist. Besonders wichtig ist schließlich, dass die Gelenkansätze am Schrägbalken vorgefertigt sind und daher zusammen mit dem Schrägbalken eine Baugruppe bilden. Dabei ist entscheidend, dass die Gelenkansätze längs des Schrägbalkens bereits an ihren vorbestimmten Sollpositionen fest angesetzt sind, d. h. an den Positionen, an denen die Gelenkansätze bei plangemäß errichtetem Ständer entsprechend der vorgenannten Statikberechnung vorgesehen sind.

Der Hauptvorteil der Erfindung ergibt sich aus der vorgefertigten Baugruppe. Bei dem aus dem Stand der Technik bekannten Montagesystem wäre eine Vormontage theoretisch zwar denkbar, wegen der eingangs erwähnten Dreifachfunktion der Schraubbolzen aber nicht praxisgerecht, da die Gelenkansätze nicht nur an ihrer Sollposition, sondern zugleich in ihren exakten Winkelstellungen festgeklemmt werden müssten. Dadurch, dass die Funktionen Drehlagerung und Ansetzen erfindungsgemäß räumlich getauscht vorgesehen sind, können die Gelenkansätze am Schrägbalken unverdrehbar längsgeführt sein. Infolgedessen ist es nun möglich, die Gelenkansätze auf einfache Weise an der jeweils vorgegebenen Stelle am Schrägbalken unabhängig von der Drehlagerung fest anzusetzen, vorzugsweise bereits werkseitig und in Serie.
Die vorgefertigte Baugruppe spart dem Monteur vor Ort einige wesentliche Handgriffe bei der Errichtung des Ständers. So kann nicht nur Arbeit für die Montage der Gelenkansätze, sondern insbesondere die Einstellung der Neigung des Schrägbalkens und dessen Positionierung über der Stütze komplett entfallen, was im Stand der Technik wegen der Dreifachfunktion der Schraubbolzen unabdingbar Teil des Errichtens ist. Aus demselben Grund ist es für den Monteur einfacher als bisher, insbesondere bei einer nicht einwandfrei gesetzten Stütze, die Neigung und die Position des Schrägbalkens nachzustellen. So können die beiden Gelenkansätze am Schrägbalken jeweils einzeln von ihrer Sollposition gelöst, verschoben und an einer geeigneteren Korrekturposition wieder fest angesetzt werden, ohne dass starre Winkel das Dreieckfachwerk zwängen, da die drei Gelenkverbindungen während und sogar nach der Montage drehfrei bleiben können. Zusammenfassend lässt sich festhalten, dass das erfindungsgemäße Montagesystem auch von einem weniger erfahrenen Monteur in signifikant kürzerer Zeit als bisher zu einem Ständer errichtet werden kann. Das Montagesystem eignet sich daher insbesondere für Photovoltaik-Freiflächenanlagen im industriellen Maßstab.

In einer ersten bevorzugten Ausführungsform weist mindestens einer der beiden Gelenkansätze einen Gelenkabschnitt zum Lagern eines Gelenkbolzens auf, wobei der Gelenkabschnitt so angeordnet ist, dass die Drehachse eines dort gelagerten Gelenkbolzens den Schrägbalken außerhalb kreuzt. Vorzugsweise kann der Gelenkbolzen so gelagert werden, dass bei errichtetem Ständer seine Drehachse den Schrägbalken unterhalb kreuzt. Dies kann die Gestaltung der Gelenkansätze deutlich vereinfachen. Mit ausreichendem Abstand zwischen dem Schrägbalken und der Drehachse kann zudem der Zugriff zum Lösen, Verschieben und Feststellen der Gelenkansätze längs des Schrägbalkens frei von schwenkbaren Bauteilen gehalten werden. Daher kann der Gelenkansatz längs des Schrägbalkens auch entsprechend kurz ausführbar sein, ohne zum Beispiel von der Strebe kreuzend überdeckt zu werden. Zum Lagern des Gelenkbolzens können im Gelenkabschnitt insbesondere Achsbohrungen vorgesehen sein, so dass eine Drehlagerung einfach und zuverlässig herstellbar ist. Dadurch, dass die Drehachse außerhalb verläuft, kann ein einziger und entsprechend langer Gelenkbolzen verwendet werden, ohne dabei den Schrägbalken zu durchdringen. Schließlich ist der zweite Gelenkansatz vorzugsweise so ausgeführt, dass eine dort montierte Strebe zum Schrägbalken hin einklappbar ist.
In einer Weiterentwicklung ist der Gelenkabschnitt mindestens eines Gelenkansatzes U-profilförmig ausgeführt. Ein solcher Gelenkabschnitt verläuft insbesondere parallel zum Schrägbalken und ist bei errichtetem Ständer nach unten hin geöffnet. Er kann in Art einer Achsgabel mit zwei gegenüberliegenden Wangen wirken, welche das Ende der Stütze oder der Strebe oder daran gegebenenfalls aufgesetzte Gelenkköpfe mittels eines Gelenkbolzens gelenkig aufnehmen können. Außerdem lassen sich U-profilförmige Gelenkansätze im Wesentlichen durch Ablängen eines extrudierten Profilstrangs einfach und kostengünstig in Serie herstellen.

In einer weiteren bevorzugten Ausführungsform weist der Gelenkabschnitt mindestens eines Gelenkansatzes zur Lagerung eines Gelenkbolzens offene Achsschlitze auf. Ein Gelenkbolzen kann in die vorzugsweise zwei offenen Achsschlitze einfacher als in Achsbohrungen eingesetzt werden, da beim Errichten die zu verbindenden Gelenkteile nicht mehr exakt axial zur Deckung gebracht werden müssen. Außerdem ist es in besonders vorteilhafter Weise möglich, den Gelenkbolzen an dem Gegenstück der Gelenkverbindung vorab zu montieren.
Zusätzlich kann es zweckmäßig sein, die offenen Achsschlitze des Gelenkabschnittes des ersten Gelenkansatzes so auszuführen, dass diese bei errichtetem Ständer nach unten offen sind. Dadurch kann die erste Gelenkverbindung durch bloßes Auflegen des Schrägbalkens zumindest vorbereitend hergestellt werden. Dazu braucht der Schrägbalken an seinem ersten Gelenkansatz lediglich auf einen Gelenkbolzen gesetzt zu werden, der an der Stütze oder einem daran gegebenenfalls aufgesetzten Gelenkkopf bereits montiert vorgesehen ist. Dabei sind die offenen Achsschlitze bei errichtetem Ständer vorzugsweise in etwa vertikal nach unten orientiert. Eine Abweichung um mehrere Grad ist jedoch gut tolerierbar, so dass sich ein derartiger Gelenkansatz für Schrägbalken in unterschiedlichen Neigungen eignet. Insbesondere ist es zweckmäßig, die Achsschlitze etwa in einem Winkel von 60° zum Schrägbalken vorzusehen.
In einer Weiterbildung umfasst der Gelenkabschnitt mindestens eines Gelenkansatzes eine Sicherung gegen radiales Lösen eines Gelenkbolzens aus den offenen Achsschlitzen. Dies kann insbesondere ein Ablösen des Schrägbalkens bei hebend wirkenden Windlasten zuverlässig verhindern.
Bevorzugt ist zur Sicherung gegen radiales Lösen ein Sperrschieber vorgesehen, der tangential zu einem Gelenkbolzen in den Gelenkabschnitt einschiebbar ist. Ein solcher Sperrschieber kann insbesondere als Platte ausgeführt sein, die in innere Längsführungen eines U-profilförmigen Gelenkabschnittes unterhalb des Gelenkbolzens, d. h. auf der dem Schrägbalken gegenüberliegenden Seite des Gelenkbolzens, einschiebbar ist.

In einer weiteren bevorzugten Ausführungsform weist der Schrägbalken zur Längsführung der beiden Gelenkansätze mindestens eine Längsnut auf, die hinterschnitten ist. Bezogen auf einen errichteten Ständer ist vorzugsweise in der linken und rechten Außenseite des Schrägbalkens jeweils eine hinterschnittene Längsnut integriert. Mithilfe einer Längsnut können die Gelenkansätze einfach und sicher längs des Schrägbalkens verschoben und festgestellt werden. Hierfür kann insbesondere eine vielfach bewährte Kombination aus Nutstein und Schraube eingesetzt werden. Um die Gelenkansätze am Schrägbalken erfindungsgemäß unverdrehbar längszuführen, kann alternativ oder ergänzend eine mit der Längsnut parallel laufende Führungsleiste am Gelenkansatz vorgesehen sein. Bevorzugt ist es jedoch möglich, je Gelenkansatz mindestens zwei Kombinationen aus Nutstein und Schraube in der selben Längsnut voneinander beabstandet vorzusehen, um auf diese Weise ein Verdrehen zu unterbinden.

In einer weiteren bevorzugten Ausführungsform weist mindestens einer der beiden Gelenkansätze einen U-profilförmigen Ansatzabschnitt auf, an dem der Gelenkansatz am Schrägbalken unverdrehbar längsgeführt angesetzt ist. Ähnlich wie der Gelenkabschnitt kann auch der Ansatzabschnitt U-förmig ausgeführt sein. Vorzugsweise korrespondiert hierbei die Innenkontur des Ansatzabschnitts mit der Außenkontur des Schräg balkens, so dass der Ansetzabschnitt den Schrägbalken in Art eines verschiebbaren Schlittens umgreift. Ein derartiger Ansatzabschnitt kann insbesondere an den zuvor genannten Längsnuten festgeklemmt werden.

In einer weiteren bevorzugten Ausführungsform ist mindestens einer der beiden Gelenkansätze H-profilförmig ausgeführt, wobei sich die Form des Gelenkansatzes aus dem vorstehend beschriebenen U-profilförmigen Gelenkabschnitt und dem U-profilförmigen Ansatzabschnitt ergibt. Dadurch kann die Innenkontur des Gelenkansatzes an seinem oberen Abschnitt mit dem Schrägbalken und an seinem unteren Abschnitt mit der Strebe bzw. der Stütze oder den daran ggf. aufgesetzten Gelenkpartnem korrespondieren. Außerdem kann ein solcher Gelenkansatz einfach und kostengünstig im Wesentlichen durch Ablängen eines entsprechend extrudierten Profilstranges hergestellt werden.

In einer besonders bevorzugten Ausführungsform umfasst die erste Gelenkverbindung einen Gelenkkopf, der auf das obere Ende der Stütze aufgesetzt und über einen Gelenkbolzen mit dem ersten Gelenkansatz gelenkig verbunden werden kann. Das obere Ende der Stütze eignet sich unter Umständen nur bedingt als Gelenkpartner, da es beim Errichten, insbesondere beim Errichten mittels Rammen, leicht beschädigt werden kann. Hier bietet ein separater Gelenkkopf, der vorzugsweise erst nach dem Errichten der Stütze auf diese aufgesetzt wird, besondere Vorteile. Entsprechend ist die Stütze mit dem ersten Gelenkansatz mittels dieses zwischengeordneten Gelenkkopfes drehgelenkig verbindbar.
In einer Weiterentwicklung kann der Gelenkkopf quer zur Stütze und/oder parallel zur Stütze verschiebbar aufgesetzt werden. Dadurch können Abweichungen aus der Vertikalen und Abweichungen von einer Sollhöhe, die sich in der Praxis beim Errichten der Stütze oftmals ergeben, korrigiert werden. Hierbei ist eine Quer- und Höhenverstellbarkeit von etwa +-15 mm ist den meisten Fällen ausreichend.

In einer weiteren Optimierung kann der Gelenkkopf einen Gelenkbolzen höhenverstellbar aufnehmen. Der Gelenkkopf kann dazu in Art einer Gabel zwei Wangen aufweisen in denen Achsschlitze enthalten sind, die bei errichtetem Ständer etwa vertikal verlaufen. Der Gelenkbolzen kann dann an den Wangen in unterschiedlichen Höhen festgespannt werden. Dabei können zum Sichern gegen Verrutschen an für den Gelenkbolzen vorgesehenen Schraubmuttern sowie an den Wangen ineinandergreifende Kerbverzahnungen integriert sein. Ergänzend ist es möglich, die Achsschlitze nach oben hin offen vorzusehen.

In einer weiteren bevorzugten Ausführungsform ist zum Ausgleich einer Verdrehung einer errichteten Stütze in der ersten und der dritten Gelenkverbindung je ein zusätzlicher rotatorischer Freiheitsgrad vorgesehen. Dadurch kann der Schrägbalken zusammen mit der Strebe trotz einer unter Umständen in ihrer Längsachse verdreht errichteten Stütze in die vorgesehene Azimutalausrichtung gebracht werden. Der Ausgleich einer Verdrehung ist insbesondere dann wichtig, falls die Stütze in einer Stützenreihe angeordnet sein soll. Hierbei hat sich ein Verdrehbereich von etwa +-10° als ausreichend erwiesen. Die zusätzlichen Rotationsachsen fluchten vorzugsweise vertikal bzw. parallel zur Stütze. Es ist aber auch möglich, die zusätzlichen Rotationsachsen im begrenzten Maße knickend vorzusehen. Wesentlich ist, dass der Schrägbalken zusammen mit der Strebe etwa um die Längsachse der Stütze verdrehbar ist.
In einer Weiterentwicklung in Kombination mit dem zuvor beschriebenen Gelenkkopf kann dieser um die Stütze und/oder vertikal verdrehbar auf das obere Ende der Stütze aufgesetzt werden.
Und in einer Weiterentwicklung im Zusammenhang mit der dritten Gelenkverbindung umfasst diese ein Gelenkteil mit zwei zueinander senkrechten Drehachsen, wobei das Gelenkteil an der Stütze und am unteren Ende der Strebe anordenbar ist. Ein derartiges Gelenkteil kann vorzugsweise in Art eines Kreuzgelenks ausgeführt sein, wobei es jedoch nicht erforderlich ist, dass sich dessen Drehachsen schneiden. Zum einfachen Anschließen an die Stütze können dort in einer vorgegebenen Höhe Achsbohrungen für einen Gelenkbolzen vorgesehen sein, der mit dem Gelenkteil zusammenwirken kann.

In einer weiteren Ausführungsform sind für die dritte Gelenkverbindung längs der Stütze in unterschiedlichen Höhen mehrere Achsbohrungen für einen Gelenkbolzen vorgesehen. Dies kann sowohl für ein einfaches Kippgelenk als auch für das zuvor beschriebene Gelenkteil von Vorteil sein, da auf diese Weise eine Standardstütze flexibel für unterschiedliche Neigungen des Schrägbalkens und für unterschiedliche Strebenlängen geeignet sein kann. In einer besonders bevorzugten Ausführungsform umfasst die erfindungsgemäße Baugruppe auch die Strebe, wobei die Strebe mit dem zweiten Gelenkansatz drehgelenkig verbunden ist. Dadurch spart sich der Monteur vor Ort weitere Handgriffe, die werkseitig in Serie effizienter erledigt werden können. Die Strebe kann hierbei direkt oder auch über einen strebenseitigen Gelenkpartner mit dem zweiten Gelenkansatz drehgelenkig verbunden sein. Für diese Verbindung kann sich insbesondere ein Gelenkbolzen eignen.
In einer Weiterentwicklung ist die Strebe zum Schrägbalken hin eingeklappt. Dadurch kann das Packmaß der Baugruppe klein gehalten werden. Vorzugsweise ist die Strebe dabei gegen unbeabsichtigtes Wegklappen, insbesondere während einer Verladung, gesichert.

In einer weiteren bevorzugten Ausführungsform umfasst die erfindungsgemäße Baugruppe mehrere Halteelemente für zum Schrägbalken quer anzuordnende Tragprofile, wobei die Halteelemente an Sollpositionen oder in der Nähe von diesen am Schrägbalken angeordnet sind. Diese Halteelemente können bevorzugt so geformt sein, dass die Tragprofile zunächst werkzeugfrei, insbesondere durch bloßes Einsetzen oder Einhaken am Schrägbalken zumindest behelfsweise befestigbar sind. In vorteilhafter Weise können so weitere zeitraubende Montageschritte vor Ort entfallen, die werkseitig effizienter und sogar automatisiert ausführbar sind.

Die eingangs beschriebene Aufgabe wird zudem mit dem in Anspruch 16 angegebenen Verfahren zum Konfektionieren eines Montagesystems gelöst. So ist ausgehend von den in Anspruch 1 beschriebenen Komponenten das Verfahren demgemäß dadurch bestimmt, dass eine den Schrägbalken und die beiden Gelenkansätze umfassende Baugruppe vormontiert wird, wobei der erste und der zweite Gelenkansatz am Schrägbalken unverdrehbar längsgeführt an ihren Sollpositionen fest angesetzt werden.
Das Konfektionieren des Montagesystems erfolgt zweckmäßigerweise werkseitig. Dort ist es möglich, die Baugruppe industriell in Serie vorzufertigen und einer entsprechenden Qualitätssicherung zu unterziehen. Das Montagesystem kann dann vorgefertigt an den Standort der Freiflächenanlage geliefert und dort errichtet werden.
In einer besonders vorteilhaften Weiterentwicklung wird die Strebe gleich mit zu der Baugruppe vormontiert, wobei die Strebe mit dem zweiten Gelenkansatz drehgelenkig verbunden wird und zum Schrägbalken hin eingeklappt ist oder wird. Dazu kann die Strebe unmittelbar oder auch über einen strebenseitigen Gelenkpartner mit dem zweiten Gelenkansatz drehgelenkig verbunden werden, in beiden Fällen vorzugsweise mittels eines Gelenkbolzens. Außerdem ist es insbesondere für die Verladung von Vorteil, wenn die Strebe abschließend gegen Wegklappen vom Schrägbalken gesichert wird.

Nachfolgend wird ein Ausführungsbeispiel des erfindungsgemäßen Montagesystems anhand von Zeichnungen näher erläutert. Es zeigen:
- **Fig. 1**: die Unterkonstruktion einer Freiflächenanlage mit drei Ständern,
- **Fig. 2**: einen der Ständer gemäß **Fig. 1**,
- **Fig. 3** und **Fig. 4**: die zweite Gelenkverbindung des Ständers gemäß **Fig. 2** im Detail,
- **Fig. 5** und **Fig. 6**: die dritte Gelenkverbindung des Ständers gemäß **Fig. 2** im Detail,
- **Fig. 7**: die erste Gelenkverbindung des Ständers gemäß **Fig. 2** im Detail,
- **Fig. 8** bis **Fig. 10**: Bauteile der ersten Gelenkverbindung gemäß **Fig. 7****,**
- **Fig. 11**: eine vorgefertigte Baugruppe des Ständers gemäß **Fig. 2****,**
- **Fig. 12** und **Fig. 13**: die erste Gelenkverbindung gemäß **Fig. 7** mit Montageschritten,
- **Fig. 14**: eine um Klemmen ergänzte Baugruppe gemäß **Fig. 11****.**

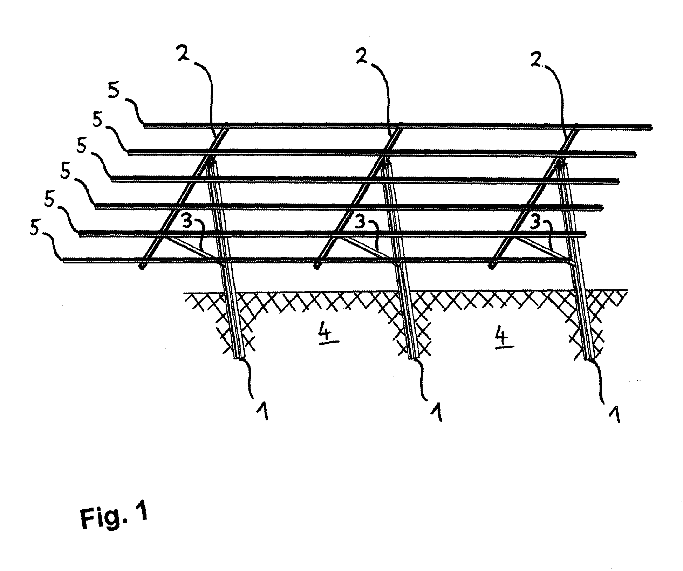

Zur Übersicht zeigt **Fig. 1** die Unterkonstruktion einer Photovoltaik-Freiflächenanlage mit drei aus dem erfindungsgemäßen Montagesystem errichteten Ständern. Jeder Ständer umfasst eine Stütze **1,** einen Schrägbalken **2** sowie eine Strebe **3,** die über drei Gelenkverbindungen zu einem Dreieckfachwerk zusammengesetzt sind. Die drei Gelenkverbindungen werden im Einzelnen weiter unten erläutert.
Aus **Fig. 1** ist weiter ersichtlich, dass die Stützen **1** vertikal stehen und mit ihren unteren Abschnitten im Erdboden **4** gegründet sind und dabei gleichmäßig beabstandet eine gerade Stützenreihe bilden. Quer zur Stützenreihe sind mit einer Neigung von etwa 30° die Schrägbalken **2** auf den Stützen **1** befestigt. Zum Abstreben der Schrägbalken **2** gegen die Stützen **1** sind außerdem die Streben **3** an ihren unteren Enden mit den Stützen **1** und an ihren oberen Enden mit den Schrägbalken **2** gelenkig verbunden. Ferner sind auf den Schrägbalken **2** parallel zur Stützenreihe sechs Modultragprofile **5** gleichmäßig beabstandet montiert. Und auf den Modultragprofilen **5** können schließlich nicht näher dargestellte Photovoltaikmodule installiert werden.

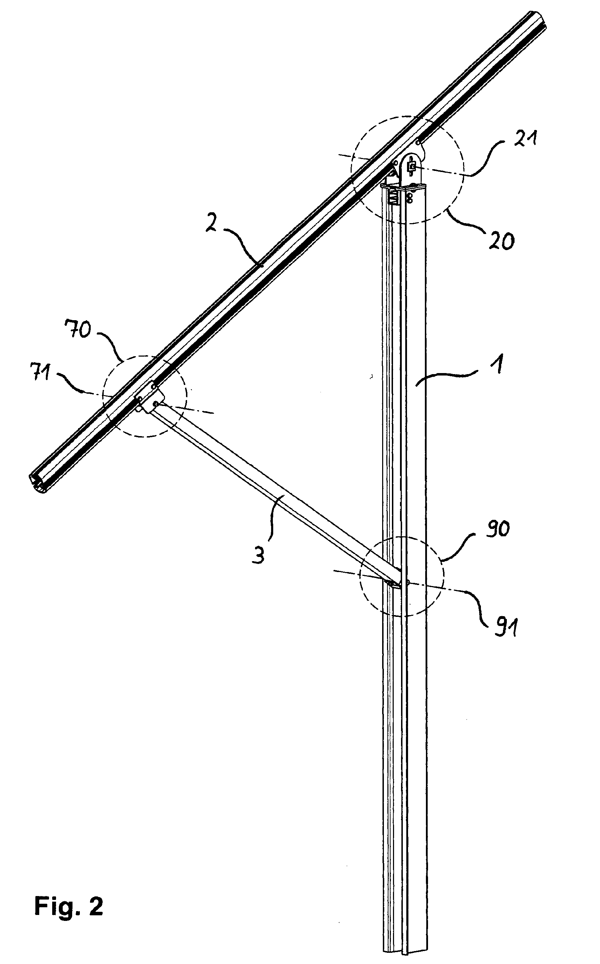

In **Fig. 2** ist einer der Ständer gemäß **Fig. 1** mit seinen drei Gelenkverbindungen **20, 70** und **90** näher dargestellt, wobei die erste Gelenkverbindung **20** zwischen dem Schrägbalken **2** und der Stütze **1,** die zweite Gelenkverbindung **70** zwischen dem Schrägbalken **2** und der Strebe **3** und die dritte Gelenkverbindung **90** zwischen der Strebe **3** und der Stütze **1** besteht. Die drei Gelenkverbindungen **20, 70** und **90** weisen jeweils eine gedachte Kippachse **21, 71** bzw. **91** auf, die annähernd horizontal und idealerweise parallel zur Stützenreihe verläuft.
Da die drei Abstände zwischen den Gelenkverbindungen **20, 70** und **90** bzw. zwischen deren Kippachsen **21, 71** und **91** fest eingestellt sind, ist das von der Stütze **1,** dem Schrägbalken **2** und der Strebe **3** eingeschlossene Dreieck in seinen Innenwinkeln geometrisch definiert. Es ist daher nicht erforderlich, Drehmomente an den Kippachsen **21, 71** oder **91** aufzunehmen.
Die Hauptgeometrie des Ständers beruht auf dem Ergebnis einer Statikberechnung, die bevorzugt von einem Tragwerksplaner durchgeführt werden kann und insbesondere die gewünschte Neigung, Länge und Traglast des Schrägbalkens **2** berücksichtigt. Die Positionen der ersten und zweiten Gelenkverbindungen **20** und **70** längs des Schrägbalkens **2** und die Position der dritten Gelenkverbindung **90** längs der Stütze **1** sind entsprechend dieser Statikberechnung vorgegeben und damit Sollpositionen. Für einen Monteur können diese Sollpositionen vor Ort zweckmäßigerweise aus einem auf der Statikberechung beruhenden Bauplan zusätzlich entnommen werden.

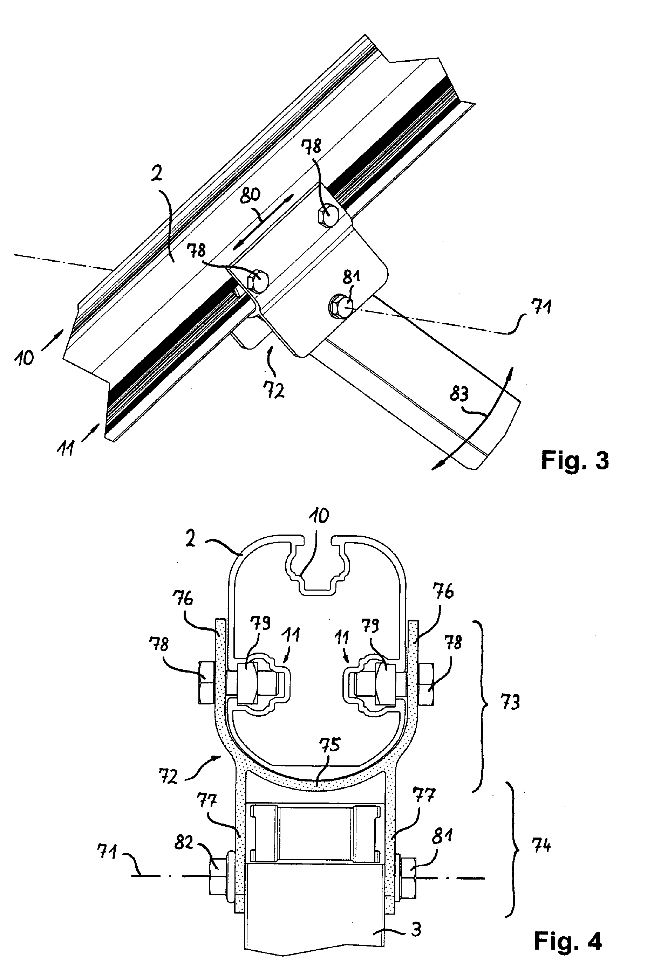

In **Fig. 3** und **Fig. 4** ist zunächst die einfachere zweite Gelenkverbindung **70** des Ständers gemäß **Fig. 2** im Detail dargestellt. Hauptelement der zweiten Gelenkverbindung **70** ist ein Gelenkansatz **72**, dessen Stirnseite in **Fig. 4** mittels Punktschraffur hervorgehoben ist. Der Gelenkansatz **72,** ist im Wesentlichen ein symmetrisches Strangpressteil und besteht im oberen Bereich aus einem Ansetzabschnitt **73** und im unteren Bereich aus einem Gelenkabschnitt **74.** Sowohl der Ansetzabschnitt **73** als auch der Gelenkabschnitt **74** sind ungefähr U-profilförmig ausgeführt, wobei der Ansetzabschnitt **73** nach oben hin und der Gelenkabschnitt **74** nach unten hin geöffnet ist und der Ansetzabschnitt **73** zwei beabstandete Wangen **76** und der Gelenkabschnitt **74** zwei beabstandete Wangen **77** aufweist und die beiden Abschnitte **73** und **74** durch einen gemeinsamen Mittelsteg **75** geteilt sind, so dass für den Gelenkansatz **72** ein Profil mit ungefähr doppel-U-förmigem bzw. H-förmigem Querschnitt gegeben ist.
Außerdem ist aus **Fig. 4** der besondere Querschnitt des Schrägbalkens **2** ersichtlich. Der Schrägbalken **2** ist ein hohles Strangpressprofil mit rechteckiger Grundform, dessen Eckbereiche und Unterseite stark abgerundet sind. In der Oberseite des Schrägbalkens **2** ist eine hinterschnittene Längsnut **10** integriert, die zur Befestigung der in **Fig. 1** dargestellten Modultragprofile **5** vorgesehen ist. Zudem ist in der linken und in der rechten Außenseite des Schrägbalkens **2** jeweils eine weitere hinterschnittene Längsnut **11** integriert, welche beide zur Befestigung des Gelenkansatzes **72** verwendet werden. Zu erwähnen bleibt, dass die beidseits an den Offnungsschlitzen der Längsnuten **11** erkennbaren und in den Ansichten maßstabsbedingt als schwarze Streifen abgebildete Riffelungen hier nur von untergeordneter Bedeutung sind.
**Fig. 3** und **Fig. 4** zeigen des Weiteren, dass der Gelenkansatz **72** am Schrägbalken **2** erfindungsgemäß unverdrehbar längsgeführt angesetzt ist. Dazu ist der Gelenkansatz **72** beidseitig über jeweils zwei Schraubverbindungen an den hinterschnittenen Längsnuten **11** des Schrägbalkens **2** verschiebbar festgeklemmt. Die vier Schraubverbindungen umfassen jeweils einen Schraubbolzen **78** sowie eine Vierkantmutter **79,** die als Nutstein dient. Die Schraubbolzen **78** führen hierbei durch vier entsprechende Bohrungen in den beiden Wangen **76** des Ansetzabschnittes **73** in die hinterschnittenen Längsnuten **11,** wo sie mittels der Vierkantmuttern **79** axial gegen die Hinterschnitte der Längsnuten **11** verspannt sind. Da zur linken und rechten Außenseite des Schrägbalkens **2** jeweils zwei Schraubverbindungen bestehen und diese entlang den Längsnuten **11** beabstandet sind, kann der Gelenkansatz **72** am Schrägbalken **2** nicht verdreht werden. Ergänzend korrespondiert die Innenkontur des Ansetzabschnittes **72** über einen weiten Bereich mit der Außenkontur des Schrägbalkens **2,** so dass der Gelenkansatz **72** in Art eines Schuhs längs des Schrägbalkens **2** verschiebbar geführt ist. Werden die vier Schraubverbindungen gelöst, kann der Gelenkansatz **72** längs des Schrägbalkens **2** bzw. in einer der Richtungen des Doppelpfeils **80** aus seiner Sollposition verschoben und am Schrägbalken **2** an einer anderen Position bzw. einer Korrekturposition wieder fest angesetzt werden.
Darüber hinaus wird in **Fig. 3** und **Fig. 4** offenbart, wie die Strebe **3** über einen Gelenkbolzen **81** am Gelenkansatz **74** in den Richtungen des Doppelpfeils **83** schwenkbeweglich gelagert ist. So umfassen die Wangen **77** des Gelenkabschnitts **74** das obere Ende der Strebe **3** in Art einer Gelenkgabel, wobei der Gelenkbolzen **81** durch zwei Achsbohrungen in den Wangen **77** sowie durch zwei Achsbohrungen im oberen Endbereich der Strebe **3** führt und mit einer Mutter **82** axial gesichert ist. Der Gelenkbolzen **81** verläuft in der Kippachse **71** entsprechend unterhalb des Schrägbalkens **2.** Zudem ist die Verbindung zwischen der Strebe **3,** die einen quadratischen Hohlquerschnitt aufweist, und dem Gelenkansatz **72** so ausgeführt, dass die Strebe **3** zum Schrägbalken **2** hin einklappbar ist. Hierzu ist zwischen dem oberen Ende der Strebe **3** und dem Mittelsteg **75** des Gelenkansatzes **72** ein ausreichender Bewegungsfreiraum gegeben.

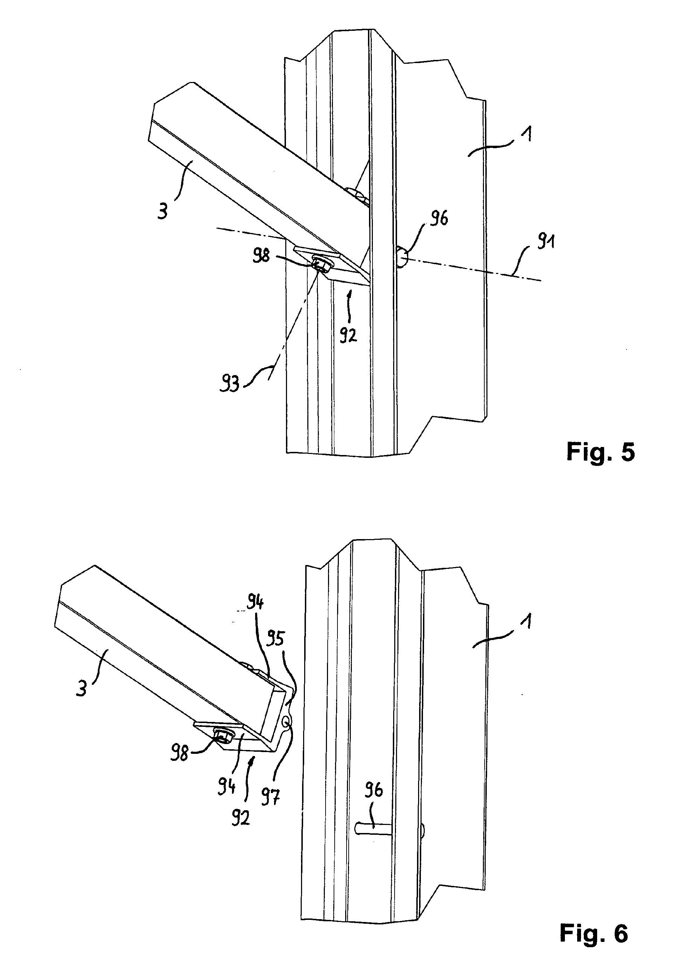

**Fig. 5** und **Fig. 6** zeigen die erste Gelenkverbindung **90** des Ständers gemäß **Fig. 2** im Detail. Hauptelement der dritten Gelenkverbindung **90** ist ein Gelenkkörper **92,** der die Strebe **3** mit der Stütze **1** an der Kippachse **91** sowie einer hierzu senkrechten Drehachse **93** in zwei rotatorischen Freiheitsgraden gelenkig verbindet und wie ein Kreuzgelenk wirkt, dessen Achsen sich jedoch nicht in einem Punkt schneiden.
Insbesondere aus der Explosionsansicht gemäß **Fig. 6** ist ersichtlich, dass der Gelenkkörper **92** als U-profilförmiges Strangpressteil mit zwei gegenüberliegenden Wangen **94** und einem Mittelsteg **95** ausgeführt und über einen ersten Gelenkbolzen **96** zwischen zwei Seitenwänden der Stütze **1** um die Kippachse **91** schwenkbar befestigt ist. Dazu ist in der Mitte des Mittelstegs **95** eine zylindrische Bolzenaufnahme **97** integriert, die parallel zur Kippachse **91** verläuft. Der erste Gelenkbolzen **96** führt durch diese Bolzenaufnahme **97** sowie links und rechts durch zwei nicht näher ersichtliche Achsbohrungen in den Seitenwänden der Stütze **1,** die als U-profilförmiges bzw. geringfügig trapezförmiges Walzprofil ausgeführt ist, so dass die Stütze **1** den Gelenkkörper **92** in Art einer Gelenkgabel kippbar aufnimmt und die Strebe **3** damit in ihrer Neigung beweglich ist. Die Achsbohrungen in den Seitenwänden längs der Stütze **1** sind vorzugsweise bereits werkseitig vorgesehen. Und deren Position ergibt sich zweckmäßigerweise aus der eingangs genannten Statikberechnung.
Des Weiteren ist die Strebe **3** über einen zweiten Gelenkbolzen **98** um die Drehachse **93** schwenkbeweglich verbunden. Dazu umfassen die beiden Wangen **94** das untere Ende der Strebe **3** an deren oberer und unterer Seite, und es sind in den beiden Wangen **94** sowie in der oberen und unteren Seite des Endes der Strebe **3** jeweils zwei Achsbohrungen ausgenommen, durch die der zweite Gelenkbolzen **98** führt. Auf diese Weise nimmt der Gelenkkörper **92** die Strebe **3** zwischen seinen Wangen **94** ebenfalls in Art einer Gabel schwenkbar auf, so dass die Strebe **3** bei einer eventuellen Verdrehung der Stütze **1** aus der Stützenreihe korrekt ausrichtbar ist.

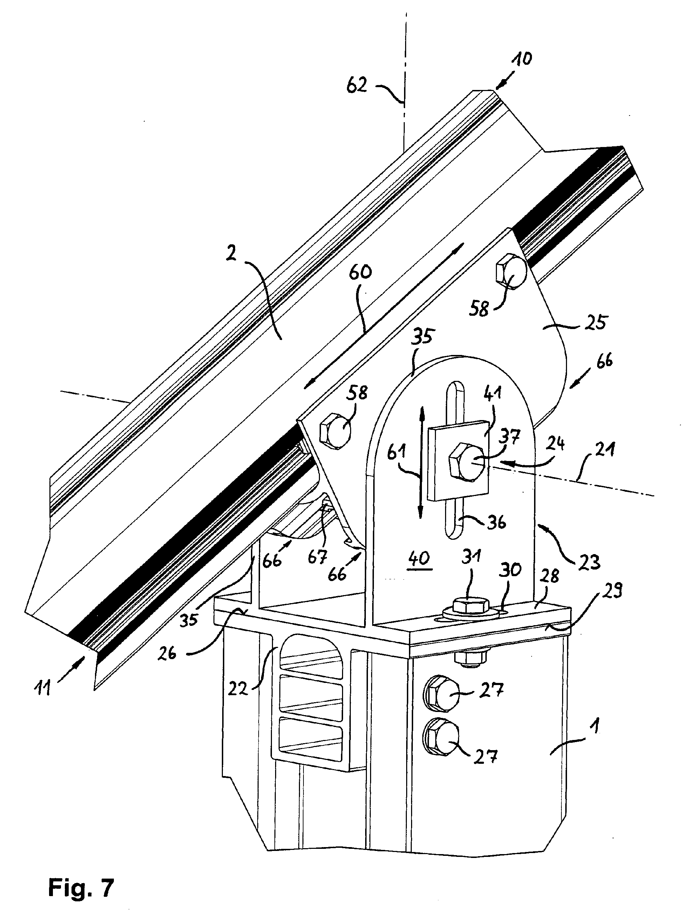

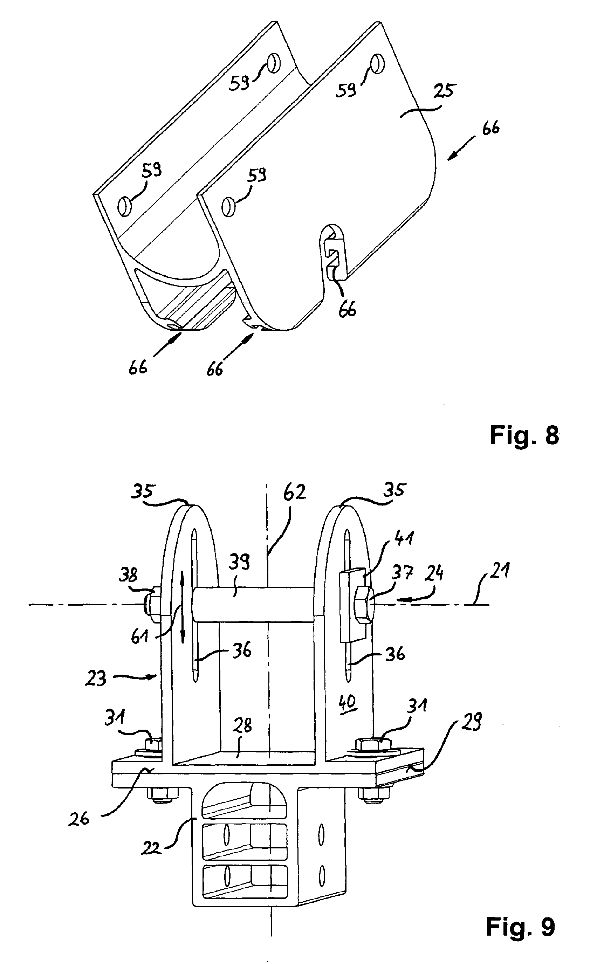

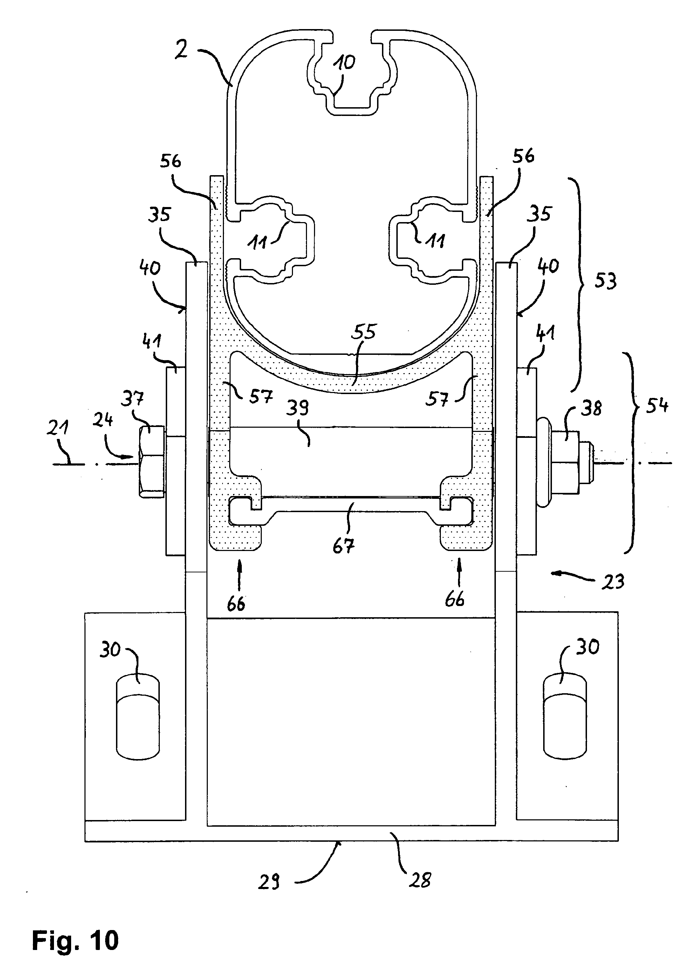

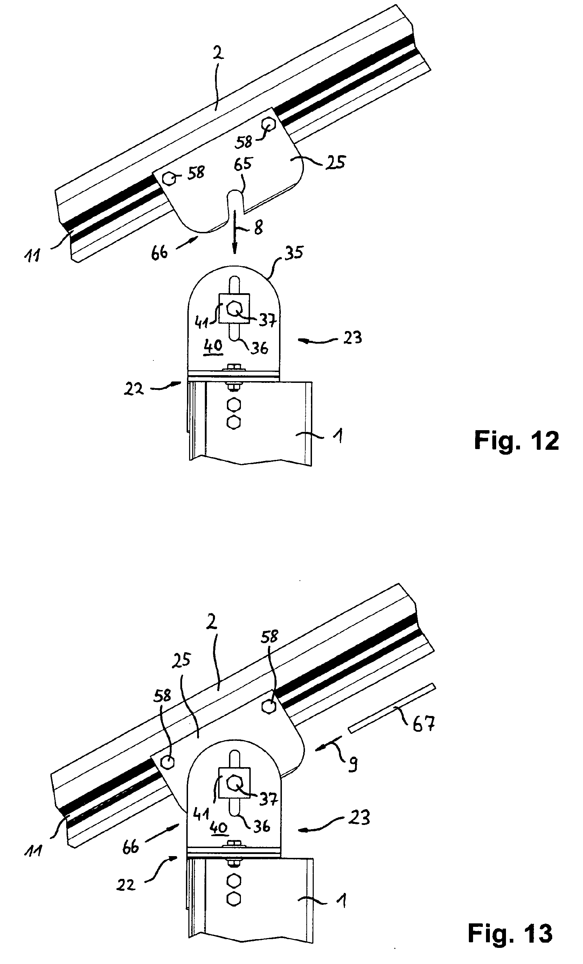

**Fig. 7** zeigt die erste Gelenkverbindung **20** des Ständers gemäß **Fig. 2** im Detail. Die erste Gelenkverbindung **20** umfasst im Wesentlichen eine auf der Stütze **1** befestigte Plattform **22,** einen auf der Plattform **22** verschiebbar angeordneten Gabelkopf **23** mit einer Gelenkachse **24** sowie einen über die Gelenkachse **24** kippbar gelagerten Gelenkansatz **25,** der wiederum am Schrägbalken **2** verschiebbar angesetzt ist. Zur weiteren Verdeutlichung sind in **Fig. 8** bis **Fig. 10** die wichtigsten Elemente der ersten Gelenkverbindung **20** gesondert dargestellt.
Die Plattform **22** ist ein Strangpressteil mit T-förmigem Querschnitt, das einen breiten Mittelsteg mit Hohlräumen aufweist. Außerdem verfügt die Plattform **22** über eine plane Oberseite **26,** die für den Gabelkopf **23** am Kopf der Stütze **1** ein horizontales Auflager bietet. Die Befestigung der Plattform **22** an der Stütze **1** erfolgt mittels zweier Schraubenverbindungen **27,** die durch entsprechende Bohrungen in den Seitenwänden der Stütze **1** und im Mittelsteg der Plattform **22** führen.
Der Gabelkopf **23** ist ebenfalls aus einem Strangpressteil hergestellt. Er weist einen Fuß **28** mit einer planen Unterseite **29** auf, die als Gleitpartner zur Oberseite **26** der Plattform **22** wirkt. Der Gabelkopf **23** kann daher auf der Plattform **22** verschoben und verdreht werden, wobei zur Befestigung und Führung in der Plattform **22** zwei nicht näher ersichtliche und quer zum Schrägbalken **2** ausgerichtete Langlöcher ausgenommen sind und in der linken und rechten Seite des Fußes **28** zwei weitere Langlöcher **30** ausgenommen sind, die parallel zum Schrägbalken **2** verlaufen. Die Langlöcher **30** im Fuß **28** sowie die Langlöcher in der Plattform **22** sind daher so angeordnet, dass diese jeweils ein sich kreuzendes Lochpaar bilden, wobei je Lochpaar eine Schraubverbindung **31** besteht. Auf diese Weise kann der Gabelkopf **23** auf der Plattform **22** gegenüber der Stütze **1** quer und auch längs zur Stützenreihe um ein geringes Maß verschoben und dann festgestellt werden. Da zwischen den Lochwandungen der zwei Lochpaare einerseits und den Schäften der Schraubverbindungen **31** andererseits etwas Bewegungsspiel besteht, kann der Gabelkopf **23** außerdem geringfügig gegenüber der Plattform **22** um eine vertikale Drehachse **62** verdreht werden, um damit den Schrägbalken **2** bei einer eventuellen Verdrehung der Stütze **1** aus der Stützenreihe azimutal korrekt ausrichten zu können. Diese Korrektur kann zusammen mit der Strebe **3** erfolgen, da diese gemäß **Fig. 5** und **Fig. 6** ebenfalls in zwei rotatorischen Freiheitsgraden an der Stütze **1** gelenkig befestigt ist. Dass die Drehachse **93** des Gelenkköpers **92** gemäß **Fig. 5** dabei nicht mit der Drehachse **62** fluchtet, kann bei den in der Regel kleinen Korrekturwinkeln toleriert werden.
Des Weiteren ist zu erkennen, dass senkrecht auf dem Fuß **28** des Gabelkopfs **23** zwei parallel beabstandete Gabelwangen **35** angeordnet sind, in denen jeweils ein vertikaler Achsschlitz **36** für die Gelenkachse **24** zur höhenverstellbaren Lagerung ausgenommen ist. Wie insbesondere aus **Fig. 9** ersichtlich ist, umfasst die Gelenkachse **24** einen durch beide Achsschlitze **36** führenden Schraubbolzen **37,** eine Mutter **38** sowie eine zylindrische Distanzhülse **39,** die zwischen den beiden Gabelwangen **35** und koaxial auf dem Schraubbolzen **37** angeordnet ist. Außerdem ist zwischen den Außenseiten **40** der Gabelwangen **35** und dem Kopf des Schraubbolzens **37** bzw. der Mutter **38** jeweils eine quadratische Beilagscheibe **41** koaxial zwischengeordnet. Wesentlich dabei ist, dass die Gelenkachse **24** in den Achsschlitzen **36** bzw. in einer der Richtungen des Pfeils **61** höhenverstellbar ist. Dazu kann der Schraubbolzen **37** gelöst, nach unten oder oben verschoben und in einer anderen Höhe wieder verspannt werden, wobei die Distanzhülse **39** beim Verspannen verhindert, dass die Gabelwangen **35** auf Biegung beansprucht werden. Damit die Gelenkachse **24** nicht ungewollt nach unten oder oben verrutscht, sind sowohl an den Außenseiten **40** der Gabelwangen **35** als auch an den Innenseiten der quadratischen Beilagscheiben **41** in den Zeichnungen nicht näher dargestellte, horizontal verlaufende Kerbverzahnungen eingearbeitet, die beim Verspannen der Gelenkachse **24** ineinandergreifen. Auf diese Weise ist die Gelenkachse **24** nahezu stufenlos an den Gabelwangen **35** entlang den Achsschlitzen **36** höhenverstellbar und zudem gegen Verrutschen gesichert. Die Kerbverzahnungen können bevorzugt im Strangpressverfahren mit gefertigt sein.
Aus **Fig. 7** bis **Fig. 10** ist ferner ersichtlich, dass der Gelenkansatz **25** sehr ähnlich zum Gelenkansatz **72** der zweiten Gelenkverbindung gemäß **Fig. 3** und **Fig. 4** aufgebaut ist. So ist der Gelenkansatz **25** ebenfalls im Wesentlichen ein symmetrisches Strangpressteil und besteht im oberen Bereich aus einem Ansetzabschnitt **53** und im unteren Bereich aus einem Gelenkabschnitt **54.** Ebenso sind der Ansetzabschnitt **53** und der Gelenkabschnitt **54** ungefähr U-profilförmig ausgeführt, wobei der Ansetzabschnitt **53** nach oben hin und der Gelenkabschnitt **54** nach unten hin geöffnet ist und der Ansetzabschnitt **53** zwei beabstandete Wangen **56** und der Gelenkabschnitt **54** zwei beabstandete Wangen **57** aufweist und die beiden Abschnitte **53** und **54** durch einen gemeinsamen Mittelsteg **55** geteilt sind, so dass ein Profil mit ungefähr doppel-U-förmigem bzw. mit ungefähr H-förmigem Querschnitt gegeben ist.
Auch ist der Gelenkansatz **25** auf die selbe erfindungsgemäße Art am Schrägbalken **2** unverdrehbar längsgeführt angesetzt. Dazu ist der Gelenkansatz **25** wieder beidseitig über jeweils zwei Schraubverbindungen an den hinterschnittenen Längsnuten **11** des Schrägbalkens **2** verschiebbar festgeklemmt. Die vier Schraubverbindungen umfassen jeweils einen Schraubbolzen **58** sowie eine Vierkantmutter, die als Nutstein verwendet wird. Die Schraubbolzen **58** führen hierbei durch vier entsprechende Bohrungen **59** in den beiden Wangen **56** des Ansetzabschnittes **53** in die hinterschnittenen Längsnuten **11,** wo sie mittels den Vierkantmuttern axial gegen die Hinterschnitte der Längsnuten **11** verspannt sind. Da wie beim Gelenkansatz **72** gemäß **Fig. 3** und **Fig. 4** zur linken und rechten Außenseite des Schrägbalkens **2** jeweils zwei Schraubverbindungen bestehen und diese entlang den Längsnuten **11** beabstandet sind, kann auch der Gelenkansatz **25** am Schrägbalken **2** nicht verdreht werden. Ebenfalls korrespondiert die Innenkontur des Ansetzabschnittes **53** über einen weiten Bereich mit der Außenkontur des Schrägbalkens **2,** so dass der Gelenkansatz **25** in Art eines Schuhs längs des Schrägbalkens **2** verschiebbar geführt ist. Werden die vier Schraubverbindungen gelöst, kann der Schrägbalken **2** in einer der Richtungen des Doppelpfeils **60** gegenüber dem Gelenkansatz **25** verschoben und wieder fest angesetzt werden.
Darüber hinaus wird in **Fig. 7** bis. **Fig. 10** offenbart, wie der Schrägbalken **2** am Gelenkansatz **25** über die Gelenkachse **24** am Gabelkopf **23** schwenkbeweglich gelagert ist. So umfassen die Gabelwangen **35** die Wangen **57** des Gelenkabschnitts **54,** wobei die Gelenkachse **24** in der gedachten Kippachse **21** unterhalb des Schrägbalkens **2** verläuft. Ein wesentlicher Unterschied zu dem Gelenkansatz **72** der zweiten Gelenkverbindung gemäß **Fig. 3** und **Fig. 4** besteht jedoch darin, dass zur Drehlagerung in den Wangen **57** nicht zwei Achsbohrungen, sondern zwei nach unten hin offene Achsschlitze **65** vorgesehen sind. Auf diese Art ist es möglich, den Schrägbalken **2** am Gelenkansatz **25** mittels bloßem Aufsetzen auf die Gelenkachse **24** mit dem Gabelkopf **23** kippbar zu verbinden. Die Gelenkachse **24** kann daher bereits werkseitig am Gabelkopf **23** vormontiert sein. Außerdem sind in den beiden Innenseiten der beiden Wangen **57** zwei Führungsnuten **66** eingearbeitet, die parallel zum Schrägbalken **2** verlaufen und durch die Achsschlitze **65** unterbrochen sind. In die Führungsnuten **66** ist eine Sicherungsplatte **67** eingeschoben, die zur radialen Sicherung der Gelenkachse **24** im Gelenkansatz **72** verwendet wird. Dazu sind die Führungsnuten **66** unmittelbar unterhalb der Distanzhülse **39** vorgesehen, so dass bei eingeschobener Sicherungsplatte **67,** wie insbesondere aus **Fig. 10** und nachfolgend in Fig. **13** ersichtlich, der Gelenkansatz **72** nicht mehr vom Gabelkopf **23** lösbar ist. Die Führungsnuten **66** und die korrespondierenden Kanten der Sicherungsplatte **67** sind vorzugsweise so ausgeführt, dass die Sicherungsplatte **67** mittels Einschlagen einführbar ist und dann selbsthemmend hält.

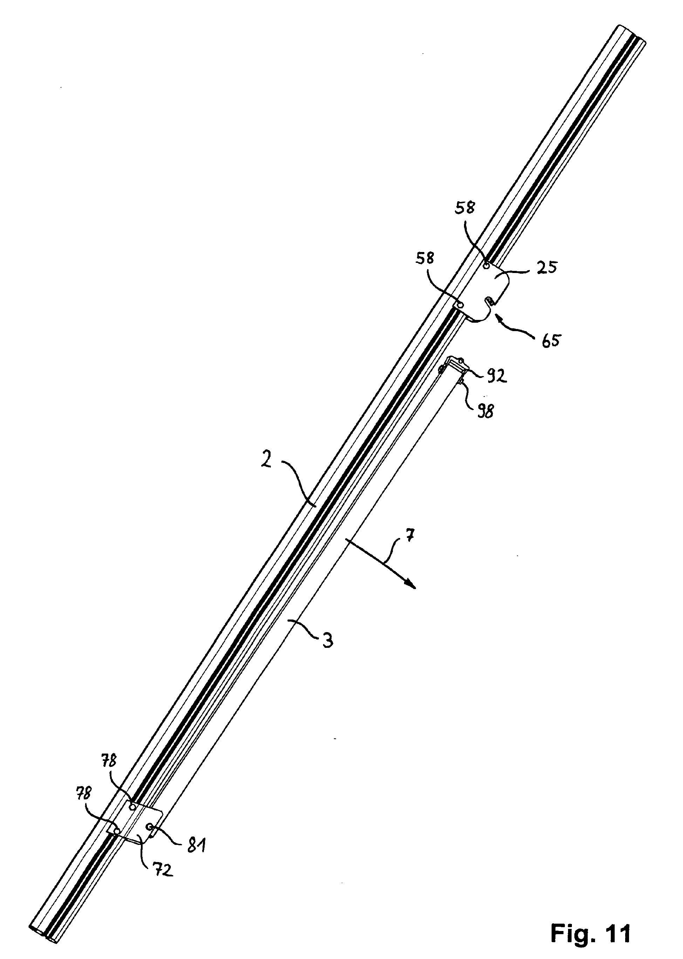

In **Fig. 11** ist eine erfindungsgemäß vorgefertigte Baugruppe dargestellt, wie sie in dem Ständer gemäß **Fig. 2** verbaut ist. Die Baugruppe umfasst insbesondere den Schrägbalken **2,** den Gelenkansatz **25** der ersten Gelenkverbindung **20,** den Gelenkansatz **72** der zweiten Gelenkverbindung **70** sowie die Strebe **3** und den Gelenkkörper **92.**
Die beiden Gelenkansätze **72** und **25** sind wie vorstehend zu **Fig. 3** und **Fig. 4** bzw. zu **Fig. 7** bis **Fig. 10** beschrieben mittels der Schrauben **78** bzw. **58** unverdrehbar längsgeführt am Schrägbalken **2** fest angesetzt. Wichtig dabei ist, dass die Gelenkansätze **72** und **25** bereits an ihren aus **Fig. 1** und **Fig. 2** ersichtlichen Sollpositionen angesetzt sind, so dass bei exakt nach Plan oder bei vom Plan tolerierbar abweichend errichteter Stütze **1** die Gelenkansätze **72** und **25** bauseits vom Monteur nicht mehr nachgestellt werden müssen. Andernfalls ist es aber dennoch möglich, die Gelenkansätze **72** und **25** durch Lösen, Verschieben und Feststellen an von den Sollpositionen abweichenden Korrekturpositionen anzuordnen.

Außerdem ist zu erkennen, dass die zweite Gelenkverbindung **70** zwischen Schrägbalken **2** und Strebe **3** wie zu **Fig. 3** und **Fig. 4** beschrieben über den Gelenkbolzen **81** bereits hergestellt ist, und dass der Gelenkköper **97** am unteren bzw. am anderen Ende der Strebe **3** über den Gelenkbolzen **97** ebenfalls bereits angeordnet ist.
Die vorgefertigte Baugruppe kann wie dargestellt serienmäßig in großen Stückzahlen werk- bzw. lieferseitig vorgefertigt und an den Errichtungsort der Freiflächenanlage geliefert werden. Zu Transportzwecken ist die Strebe **3** wie dargestellt an oder nahe an den Schrägbalken **2** geklappt. Besonders kennzeichnend für die vorgefertigte Baugruppe ist daher, dass die Strebe **3** zum Herstellen der dritten Gelenkverbindung **90** gemäß **Fig. 5** und **Fig. 6** in einer Schwenkbewegung gemäß Pfeil **7** zunächst auszuklappen ist.

In **Fig. 12** und **Fig. 13** wird veranschaulicht, wie die vorgefertigte Baugruppe gemäß **Fig. 11** unter Herstellung der ersten Gelenkverbindung **20** an der Stütze **1** angeordnet wird. Vorbereitend wurde die Stütze **1** zunächst im Erdboden **4** gemäß **Fig. 1** gegründet und anschließend die Plattform **22,** der Gabelkopf **23** sowie die Gelenkachse **24** gemäß **Fig. 9** montiert. An dieser Stelle ist zu erwähnen, dass auch der in **Fig. 9** dargestellte Zusammenbau bereits werkseitig vormontiert sein kann.
Weiter ist in **Fig. 12** zu erkennen, wie vor dem Verbinden die vorgefertigte Baugruppe über der Stütze **1** so angehoben ist, dass sich die Achsschlitze **65** des Gelenkansatzes **25** über der Gelenkachse **24** des Gabelkopfes **23** befinden. Anschließend wird die vorgefertigte Baugruppe nach unten in Richtung des Pfeils **8** zwischen die Gabelwangen **35** des Gabelkopfes **23** geführt, so dass die beiden Achsschlitze **65** bis auf Anschlag auf die Distanzhülse **39** der Gelenkachse **24** aufsitzen.
Zur radialen Sicherung kann danach, wie in **Fig. 13** veranschaulicht, die Sicherungsplatte **67** in Richtung des Pfeils **9** in die Führungsnuten **66** und damit unter die Distanzhülse **39** geschoben werden, so dass die vorgefertigte Baugruppe nicht mehr vom Gabelkopf **23** bzw. der Stütze **1** unbeabsichtigt lösbar ist.
In einem weiteren Montageschritt kann die hier nicht näher ersichtliche Strebe **3** der vorgefertigten Baugruppe vom Schrägbalken **2** weggeklappt, die gesamte Baugruppe um die Kippachse **21** soweit erforderlich etwas geschwenkt und dann auch die dritte Gelenkverbindung hergestellt werden.

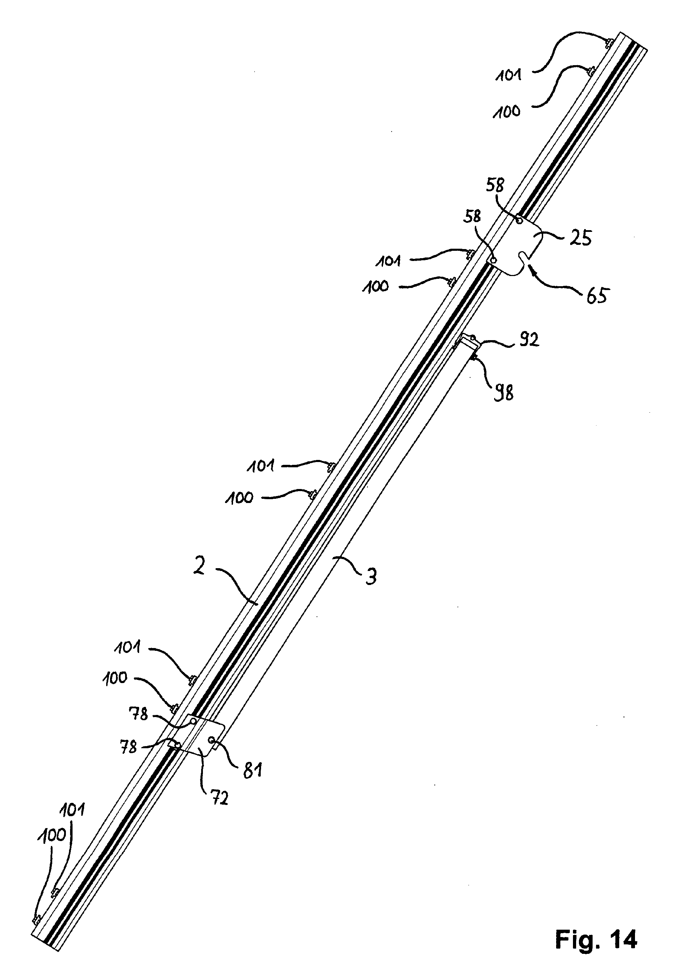

Schließlich zeigt **Fig. 14** die Baugruppe gemäß **Fig. 11** um jeweils fünf Klemmen **100** und **101** ergänzt, die zur Befestigung der auf dem Schrägbalken **2** angeordneten Modultragprofile **5** gemäß **Fig. 1** vorgesehen sind. Hierbei bilden jeweils eine der Klemmen **100** und **101** eines von fünf Klemmenpaaren. Nicht näher ersichtlich ist, dass die unteren Klemmen **100** und die oberen Klemmen **101** eines jeden Klemmpaares einen am Modultragprofil **5** beidseitig vorgesehen Haltesteg umgreifen können.
Die Klemmen **100** und **101** sind in der hinterschnittenen Längsnut **10** gemäß **Fig. 4** und **Fig. 10** durch Nutsteine verschiebbar befestigt. Wesentlich ist, dass die unteren Klemmen **100** bereits an ihren Sollpositionen angeordnet und so ausgeführt sind, dass ein Modultragprofil **5** von einem Monteur werkzeugfrei, möglichst nur durch Einsetzen oder Einhaken des unteren Teils des Haltestegs zunächst vorläufig auf dem Schrägbalken gehalten und anschließend durch Spannen der Klemmen **100** endgültig befestigbar ist. Die oberen Klemmen **101** sind etwas oberhalb ihrer Sollpositionen angeordnet, so dass diese das Aufsetzen der Modultragprofile **5** nicht behindern. Nach dem Aufsetzen können die Klemmen **101** soweit erforderlich gelöst, an der oberen Seite des Haltestegs des Modultragprofils **5** angesetzt und ebenfalls festgespannt werden.

## Patentansprüche

1. Montagesystem für Ständer für Photovoltaik-Freiflächenanlagen, je Ständer mit einer Stütze **(1)** und einem Schrägbalken **(2)** sowie einer Strebe **(3)** zum Abstreben des Schrägbalkens **(2)** gegen die Stütze **(1),** wobei die Stütze **(1),** der Schrägbalken **(2)** und die Strebe **(3)** zu einem fest einstellbaren Ständer in Form eines Dreieckfachwerks zusammengesetzt werden können und hierfür zwischen Schrägbalken **(2)** und Stütze **(1)** eine erste **(20)** und zwischen Schrägbalken **(2)** und Strebe **(3)** eine zweite **(70)** und zwischen Strebe (3) und Stütze **(1)** eine dritte Gelenkverbindung **(90)** vorgesehen ist und die erste Gelenkverbindung **(20)** einen ersten Gelenkansatz **(25)** und die zweite Gelenkverbindung **(70)** einen zweiten Gelenkansatz **(72)** umfasst und die beiden Gelenkansätze **(25, 72)** am Schrägbalken **(2)** längsgeführt anordenbar sind, **dadurch gekennzeichnet, dass** eine den Schrägbalken **(2)** und die beiden Gelenkansätze **(25, 72)** umfassende Baugruppe zusammengesetzt ist, wobei die beiden Gelenkansätze **(25, 72)** am Schrägbalken **(2)** unverdrehbar längsgeführt und dort an Sollpositionen fest angesetzt sind, und dass die Stütze **(1)** mit dem ersten Gelenkansatz **(25)** und die Strebe **(3)** mit dem zweiten Gelenkansatz **(72)** drehgelenkig verbindbar ist.

2. Montagesystem nach Anspruch 1, **dadurch gekennzeichnet, dass** mindestens einer der beiden Gelenkansätze **(25, 72)** einen Gelenkabschnitt **(54, 74)** zum Lagern eines Gelenkbolzens **(37, 81**) aufweist, wobei der Gelenkabschnitt **(54, 74)** so angeordnet ist, dass die Drehachse **(21, 71)** eines dort gelagerten Gelenkbolzens **(37, 81)** den Schrägbalken **(2)** außerhalb kreuzt, und wobei optional der Gelenkabschnitt **(54, 74)** U-profilförmig ausgeführt ist.

3. Montagesystem nach Anspruch 2, **dadurch gekennzeichnet, dass** der Gelenkabschnitt **(54)** mindestens eines Gelenkansatzes **(25)** zur Lagerung eines Gelenkbolzens **(37)** offene Achsschlitze **(65)** aufweist, wobei optional die offenen Achsschlitze **(65)** bei errichtetem Ständer nach unten hin offen sind.

4. Montagesystem nach Anspruch 3, **dadurch gekennzeichnet, dass** der Gelenkabschnitt **(54)** mindestens eines Gelenkansatzes **(25)** eine Sicherung gegen radiales Lösen eines Gelenkbolzens **(37)** aus den offenen Achsschlitzen **(65)** umfasst.

5. Montagesystem nach Anspruch 4, **dadurch gekennzeichnet, dass** zur Sicherung gegen radiales Lösen ein Sperrschieber **(67)** vorgesehen ist, der tangential zu einem Gelenkbolzen **(37)** in den Gelenkabschnitt **(54)** einschiebbar ist.

6. Montagesystem nach Anspruch 1, **dadurch gekennzeichnet, dass** der Schrägbalken **(2)** zur Längsführung der beiden Gelenkansätze **(25, 72)** mindestens eine Längsnut **(11)** aufweist, die hinterschnitten ist.

7. Montagesystem nach Anspruch 1, **dadurch gekennzeichnet, dass** mindestens einer der beiden Gelenkansätze **(25, 72)** einen U-profilförmigen Ansatzabschnitt **(53, 73)** aufweist, an dem der Gelenkansatz **(25, 72)** am Schrägbalken **(2)** unverdrehbar längsgeführt angesetzt ist.

8. Montagesystem nach einem der Ansprüche 2 bis 5 und Anspruch 7, **dadurch gekennzeichnet, dass** mindestens einer der beiden Gelenkansätze **(25, 72)** H-profilförmig ausgeführt ist, wobei sich die Form des Gelenkansatzes **(25; 72)** aus dem U-profilförmigen Gelenkabschnitt **(54, 74)** und dem U-profilförmigen Ansatzabschnitt **(53, 73)** ergibt.

9. Montagesystem nach Anspruch 1, **dadurch gekennzeichnet, dass** die erste Gelenkverbindung **(20)** einen Gelenkkopf **(23)** umfasst, der auf das obere Ende der Stütze **(1)** aufgesetzt und über einen Gelenkbolzen **(37)** mit dem ersten Gelenkansatz **(25)** gelenkig verbunden werden kann.

10. Montagesystem nach Anspruch 9, **dadurch gekennzeichnet, dass** der Gelenkkopf **(23)** quer zur Stütze **(1)** und/oder parallel zur Stütze **(1)** verschiebbar aufgesetzt werden und/oder einen Gelenkbolzen **(37)** höhenverstellbar aufnehmen kann.

11. Montagesystem nach Anspruch 1, **dadurch gekennzeichnet, dass** zum Ausgleich einer Verdrehung einer errichteten Stütze **(1)** in der ersten und der dritten Gelenkverbindung **(20, 90)** je ein zusätzlicher rotatorischer Freiheitsgrad vorgesehen ist.

12. Montagesystem nach Anspruch 11 und einem der Ansprüche 9 bis 10, **dadurch gekennzeichnet, dass** der Gelenkkopf **(23)** um die Stütze **(1)** und/oder vertikal verdrehbar auf das obere Ende der Stütze **(1)** aufgesetzt werden kann.

13. Montagesystem nach Anspruch 11, **dadurch gekennzeichnet, dass** die dritte Gelenkverbindung **(90)** ein Gelenkteil **(92)** mit zwei zueinander senkrechten Drehachsen **(91, 93)** umfasst, wobei das Gelenkteil **(92)** an der Stütze **(1)** und am unteren Ende der Strebe **(3)** anordenbar ist.

14. Montagesystem nach Anspruch 1, **dadurch gekennzeichnet, dass** die Baugruppe die Strebe **(3)** umfasst, wobei die Strebe **(3)** mit dem zweiten Gelenkansatz **(72)** drehgelenkig verbunden ist und optional zum Schrägbalken **(2)** hin eingeklappt ist.

15. Montagesystem nach einem der vorhergehenden Ansprüche, **dadurch gekennzeichnet, dass** die Baugruppe mehrere Halteelemente **(100, 101)** für zum Schrägbalken **(2)** quer anzuordnende Tragprofile **(5)** umfasst, wobei die Halteelemente **(100, 101)** an Sollpositionen oder in der Nähe von diesen am Schrägbalken **(2)** angeordnet sind.

16. Verfahren zum Konfektionieren eines Montagesystems für einen Ständer für Photovoltaik-Freiflächenanlagen, je Ständer mit einer Stütze **(1)** und einem Schrägbalken **(2)** sowie einer Strebe (3) zum Abstreben des Schrägbalkens **(2)** gegen die Stütze **(1),** wobei die Stütze **(1),** der Schrägbalken **(2)** und die Strebe **(3)** zu einem fest einstellbaren Ständer in Form eines Dreieckfachwerks zusammengesetzt werden können und hierfür zwischen Schrägbalken **(2)** und Stütze **(1)** eine erste (20) und zwischen Schrägbalken **(2)** und Strebe **(3)** eine zweite **(70)** und zwischen Strebe (3) und Stütze **(1)** eine dritte Gelenkverbindung **(90)** vorgesehen ist und die erste Gelenkverbindung **(20)** einen ersten Gelenkansatz **(25)** und die zweite Gelenkverbindung **(70)** einen zweiten Gelenkansatz **(72)** umfasst und die beiden Gelenkansätze **(25, 72)** am Schrägbalken **(2)** längsgeführt anordenbar sind, **dadurch gekennzeichnet, dass** eine den Schrägbalken **(2)** und die beiden Gelenkansätze **(25, 72)** umfassende Baugruppe vormontiert wird, wobei der erste und der zweite Gelenkansatz **(25, 72)** am Schrägbalken **(2)** unverdrehbar längsgeführt an Sollpositionen fest angesetzt werden, und dass die Stütze **(1)** mit dem ersten Gelenkansatz **(25)** und die Strebe **(3)** mit dem zweiten Gelenkansatz **(72)** drehgelenkig verbindbar ist.

17. Verfahren nach Anspruch 16, **dadurch gekennzeichnet, dass** die Strebe **(3)** mit zu der Baugruppe vormontiert wird, wobei die Strebe **(3)** mit dem zweiten Gelenkansatz **(72)** drehgelenkig verbunden wird und zum Schrägbalken **(2)** hin eingeklappt ist oder wird.

18. Verfahren nach Anspruch 16 oder 17, **dadurch gekennzeichnet, dass** mehrere Halteelemente **(100, 101)** für zum Schrägbalken **(2)** quer anzuordnende Tragprofile **(5)** vorgesehen sind und die Halteelemente **(100, 101)** mit zu der Baugruppe vormoniert werden, wobei die Halteelemente **(100, 101)** an Sollpositionen oder in der Nähe von diesen am Schrägbalken **(2)** befestigt werden.

19. Ständer aus einem Montagesystem nach einem der Ansprüche 1 bis 15, **dadurch gekennzeichnet, dass** die Stütze **(1),** der Schrägbalken **(2)** und die Strebe **(3)** zu dem fest einstellbaren Ständer in Form eines Dreieckfachwerks zusammengesetzt und hierfür die drei Gelenkverbindungen **(20, 70, 90)** hergestellt sind.

20. Anordnung des Ständers nach dem Anspruch 19, **dadurch gekennzeichnet, dass** die Stütze **(1)** ortsfest eingespannt ist.
